# EUROPEAN PATENT APPLICATION

(11) **EP 2 664 978 A2**
(43) Date of publication of application: **20.11.2013**
(21) Application number: 13168126.4
(22) Date of filing: 16.05.2013
(51) Int. Cl.: G06F 3/01, G06F 3/0485

(54) **Systems and methods for haptically enabled metadata**

(30) Priority: 16.05.2012 US 201213473081
(71) Applicant: Immersion Corporation, San Jose, CA 95134 (US)
(72) Inventor: Birnbaum, David, Oakland, CA 94607 (US); Short, Jason, San Francisco, CA 94114 (US); Devenish, Ryan, San Francisco, CA 94117 (US); Ullrich, Chris, Ventura, CA 93003 (US); Bothsa, Marcus, Aurelius, San Jose, CA 95134 (US)
(74) Representative: Phillips & Leigh

(57) **Abstract**

Systems and methods for haptically enabled metadata are disclosed. One disclosed embodiment of a method comprises receiving, by an electronic device, an electronic list corresponding to a plurality of data items. The method further comprises analyzing, by the electronic device, metadata within the electronic list to determine a haptic effect associated with a first data item in the plurality of data items. The method further comprises generating a signal, the signal being generated when information corresponding to the first data item is initially displayed on a display associated with the electronic device, the signal configured to cause the haptic effect. The method further comprises outputting the signal.

## Description

### FIELD OF THE INVENTION

The present disclosure relates generally to systems and methods for haptically enabled metadata.

### BACKGROUND

With the increase in popularity of handheld devices, especially mobile phones having touch-sensitive surfaces (e.g., touch screens), physical tactile sensations which have traditionally been provided by mechanical buttons are no longer present in many such devices. Instead, haptic effects may be output by handheld devices to alert the user to various events. Such haptic effects may include vibrations to indicate a button press, an incoming call, or a text message, or to indicate error conditions.

### SUMMARY

The present invention provides a method as defined in claim 1. The present invention correspondingly provides a computer-readable medium comprising program code processable to carry out the defined method, and an electronic device as defined in claim 16. The electronic device may comprise at least one of a mobile phone, a laptop computer, a desktop computer, a touch-sensitive input device, a tablet computer or a wearable computer. The electronic device may comprise a display comprising a touchscreen. The touchscreen may comprise input means of the electronic device. Embodiments of the present invention provide systems and methods for haptically enabled metadata. For example, one disclosed method comprises receiving, by an electronic device, electronic content comprising a plurality of data items, wherein the electronic content comprises an electronic list corresponding to a subset of the plurality of data items; analyzing, by the electronic device, metadata within the list to determine a haptic effect associated with a data item of the plurality of data items; generating, by the electronic device, a signal configured to cause the haptic effect; and outputting, by the electronic device, the signal in response to information corresponding to the data item being initially displayed on a display, the display being in communication with the electronic device. The electronic list may comprise at least one of a list of email messages, a list of contacts or a list of images, for example. The data item may thus comprise an email, an electronic business card, or an image, for example. Program code may determine that the data item is an image. Generating the signal may comprise generating at least one haptic output signal configured to drive at least one haptic output device, and outputting the signal may comprise outputting the generated at least one haptic output signal to at least one haptic output device. The haptic output device may comprise one or more of a piezo-electric actuator, a rotary actuator, a linear resonant actuator, or any other suitable actuator(s). The haptic effect may comprise at least one of a vibration, a friction, a texture, a deformation or a reaction force. Information associated with the haptic effect and the data item may be stored in a data store. In another embodiment, a computer readable medium comprises program code for causing a processor to perform such methods.

These illustrative embodiments are mentioned not to limit or define the invention, but rather to provide examples to aid understanding thereof. Illustrative embodiments are discussed in the Detailed Description, which provides further description of the invention. Advantages offered by various embodiments of this invention may be further understood by examining this specification.

### BRIEF DESCRIPTION OF THE DRAWINGS

The accompanying drawings, which are incorporated into and constitute a part of this specification, illustrate one or more examples of embodiments and, together with the description of example embodiments, serve to explain the principles and implementations of the embodiments.

Figure 1 shows an electronic device for haptically enabled metadata in accordance with an illustrative embodiment of the present invention;

Figure 2 illustrates an electronic device for content and/or context specific haptic effects in accordance with an illustrative embodiment of the present invention;

Figure 3 illustrates a system diagram depicting illustrative computing devices for haptically enabled metadata in an illustrative computing environment in accordance with an embodiment of the present invention;

Figure 4 illustrates a flow chart directed to a method of using haptically enabled metadata in accordance with an embodiment of the present invention; and

Figure 5 illustrates a flow chart directed to a method of using haptically enabled metadata in accordance with an embodiment of the present invention.

### DETAILED DESCRIPTION

Example embodiments are described herein in the context of systems and methods for haptically enabled metadata. Those of ordinary skill in the art will realize that the following description is illustrative only and is not intended to be in any way limiting. Other embodiments will readily suggest themselves to such skilled persons having the benefit of this disclosure. Reference will now be made in detail to implementations of example embodiments as illustrated in the accompanying drawings. The same reference indicators will be used throughout the drawings and the following description to refer to the same or like items.

In the interest of clarity, not all of the routine features of the implementations described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another.

### Illustrative Method

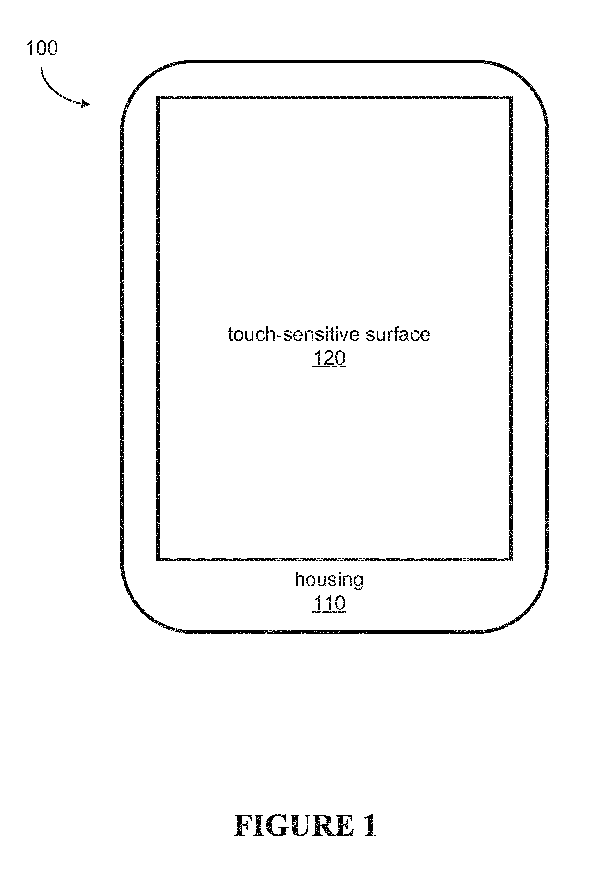

Referring to **Figure 1****,** this figure shows an illustrative electronic device 100 for haptically enabled metadata. In this illustrative embodiment, the electronic device 100 receives an electronic list of data items, such as a list of emails from an email server. The electronic device 100 then analyzes metadata that accompanies the list, or that is contained within the list, and/or metadata within one or more of the data items to determine whether a haptic effect should be associated with one or more of the data items. For example, in this illustrative embodiment, the electronic device 100 analyzes metadata to determine an importance of the email messages. If a particular email message is determined to be of high importance, then the device determines a haptic effect to associate with that email message. In this embodiment, the haptic effect is configured to notify a user of the electronic device 100 that the email message is of high importance.

As the user navigates through the electronic list of emails, such as by making scrolling gestures on the touch-sensitive display 120, the display 120 is updated to display information about some of the emails (e.g., a subject, a sender, etc.). In this illustrative embodiment, as the display 120 is refreshed, when a new email is displayed, the electronic device 100 determines whether a haptic effect has been associated with the email and, if there is an associated haptic effect, the device outputs the haptic effect. For example, when an important email scrolls onto the display, the device detects that the email has been scrolled onto the display, determines that a haptic effect is associated with the email, and plays the haptic effect. Thus, as a user scrolls through the list of email messages, the user is notified that an email message of high importance has "entered" the display 120 when the haptic effect is played.

This illustrative example is given to introduce the reader to the general subject matter discussed herein. The invention is not limited to this example. The following sections describe various additional non-limiting embodiments and examples of devices, systems, and methods for generating haptic effects based at least in part on metadata within an electronic file.

### Illustrative Device

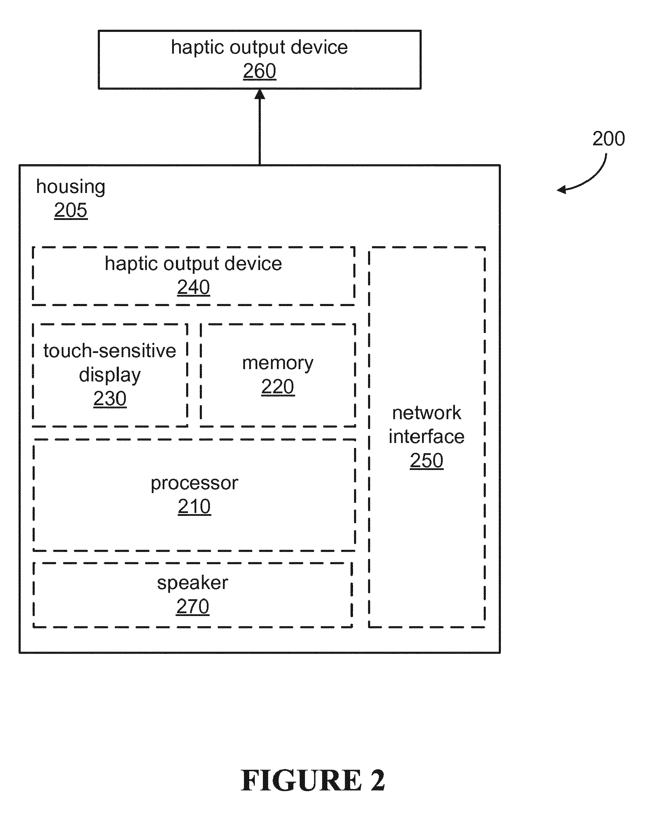

Referring now to **Figure 2**, Figure 2 illustrates an electronic device 200 for haptically enabled metadata according to an embodiment of the present invention. In the embodiment shown in Figure 2, the electronic device 200 comprises a housing 205, a processor 210, a memory 220, a touch-sensitive display 230, a haptic output device 240, and a network interface 250. The processor 210 is in communication with the memory and, in this embodiment, both the processor 210 and the memory 220 are disposed within the housing 205. The touch-sensitive display 230, which comprises or is in communication with a touch-sensitive surface, is partially disposed within the housing 205 such that at least a portion of the touch-sensitive display 230 is exposed to a user of the electronic device 200. In some embodiments, the touch-sensitive display 230 may not be disposed within the housing 205. For example, the electronic device 200 may be connected to or otherwise in communication with a touch-sensitive display 230 disposed within a separate housing.

In the embodiment shown in Figure 2, the touch-sensitive display 230 is in communication with the processor 210 and is configured to provide signals to the processor 210 or the memory 220. The memory 220 stores program code or data, or both, for use by the processor 210 and the processor 210 executes program code stored in memory 220 and receives signals from the touch-sensitive display 230. The processor 210 is also configured to output signals to cause the touch-sensitive display 230 to output images. In the embodiment shown in Figure 2, the processor 210 is in communication with the network interface 250 and is configured to receive signals from the network interface 250 and to output signals to the network interface 250 to communicate with other components or devices. In addition, the processor 210 is in communication with haptic output device 240, which is comprised within the housing 205, and haptic output device 260, which is outside of the housing 205, and is further configured to output signals to cause haptic output device 240 or haptic output device 260, or both, to output one or more haptic effects. Furthermore, the processor 210 is in communication with speaker 270 and is configured to output signals to cause speaker 270 to output sounds. In various embodiments, the electronic device 200 may comprise or be in communication with fewer or additional components or devices. For example, other user input devices such as a mouse or a keyboard, or both, may be comprised within the electronic device 200 or be in communication with the electronic device 200. A detailed description of the components of the electronic device 200 shown in Figure 2 and components that may be in association with the electronic device 200 is described below.

The electronic device 200 can be any device that is capable of receiving user input. For example, the electronic device 200 in Figure 2 includes a touch-sensitive display 230 that comprises a touch-sensitive surface. In some embodiments, a touch-sensitive surface may be overlaid on the touch-sensitive display 230. In other embodiments, the electronic device 200 may comprise or be in communication with a display and a separate touch-sensitive surface. In still other embodiments, the electronic device 200 may comprise or be in communication with a display and may comprise or be in communication with other user input devices, such as a mouse, a keyboard, buttons, knobs, slider controls, switches, wheels, rollers, other manipulanda, or a combination thereof.

Additionally or alternatively, one or more touch-sensitive surfaces may be included on or disposed within one or more sides of the electronic device 200. For example, a touch-sensitive surface may be disposed within or comprises a rear surface of the electronic device 200. A first touch-sensitive surface may be disposed within or may comprise a rear surface of the electronic device 200 and a second touch-sensitive surface may be disposed within or may comprise a side surface of the electronic device 200. Furthermore, where the electronic device 200 comprises at least one touch-sensitive surface on one or more sides of the electronic device 200 or where the electronic device 200 is in communication with an external touch-sensitive surface, the display 230 may or may not comprise a touch-sensitive surface. One or more of the touch-sensitive surfaces may have a flexible touch-sensitive surface. One or more of the touch-sensitive surfaces may be rigid. The electronic device 200 may comprise both flexible and rigid touch-sensitive surfaces.

The electronic device 200 may comprise or be in communication with fewer or additional components than are shown in Figure 2. For example, the electronic device 200 need not be in communication with speaker 270 and need not comprise haptic output device 240 and/or haptic output device 260. Likewise, the electronic device 200 need not comprise a touch-sensitive display 230 or a network interface 250, but may comprise a touch-sensitive surface and may be in communication with an external display. The electronic device 200 may not comprise or be in communication with a haptic output device at all. Where provided, the one or more haptic output devices can comprise any component, components, or technologies capable of outputting a haptic effect. Thus, in various embodiments, the electronic device 200 may comprise or be in communication with any number of components, such as in the various embodiments disclosed herein as well as variations that would be apparent to one of skill in the art.

The housing 205 of the electronic device 200 shown in Figure 2 provides protection for at least some of the components of electronic device 200. For example, the housing 205 may be a plastic casing that protects the processor 210 and memory 220 from foreign articles such as rain. In some embodiments, the housing 205 protects the components in the housing 205 from damage if the electronic device 200 is dropped by a user. The housing 205 can be made of any suitable material including but not limited to plastics, rubbers, or metals. Various embodiments may comprise different types of housings or a plurality of housings. The electronic device 200 may be for example, a multi-pressure touch-sensitive input electronic device such as a cell phone, personal digital assistant (PDA), laptop, tablet computer, desktop computer, digital music player, gaming console, handheld video game system, gamepad, a remote control, a game controller, a medical instrument, a wearable computing device, etc. Alternatively, the electronic device 200 may be embedded in another device such as, for example, the console of a car.

In the embodiment shown in Figure 2, the touch-sensitive display 230 provides a mechanism for a user to interact with the electronic device 200. For example, the touch-sensitive display 230 detects the location or pressure, or both, of a user's finger in response to a user hovering over, touching, or pressing the touch-sensitive display 230 (all of which may be referred to as a contact in this disclosure). The touch-sensitive display 230 may comprise, be connected with, or otherwise be in communication with one or more sensors that determine the location, pressure, size of a contact patch, or any of these, of one or more contacts on the touch-sensitive display 230. For example, the touch-sensitive display 230 may comprise or be in communication with a mutual capacitance system. Additionally or alternatively, the touch-sensitive display 230 may comprise or be in communication with an absolute capacitance system. In addition or yet alternatively, the touch-sensitive display 230 may comprise or be in communication with a resistive panel, a capacitive panel, infrared LEDs, photodetectors, image sensors, optical cameras, or a combination thereof. Thus, the touch-sensitive display 230 may incorporate any suitable technology to determine a contact on a touch-sensitive surface such as, for example, resistive, capacitive, infrared, optical, thermal, dispersive signal, or acoustic pulse technologies, or a combination thereof.

In the embodiment shown in Figure 2, haptic output devices 240 and 260 are in communication with the processor 210 and are configured to provide one or more haptic effects. For example, when an actuation signal is provided to haptic output device 240, haptic output device 260, or both, by the processor 210, the respective haptic output device(s) 240, 260 output(s) a haptic effect based on the actuation signal. For example, the processor 210 may be configured to transmit an actuation signal to haptic output device 240 comprising an analog drive signal. Alternatively, the processor 210 may be configured to transmit an actuation signal comprising a command to haptic output device 240, wherein the command includes parameters to be used to generate an appropriate drive signal to cause the haptic output device 240 to output the haptic effect. The same applies to the actuation signal provided to haptic output device 260. Different signals and different signal types may be sent to each of one or more haptic output devices. For example, in some embodiments, a processor may transmit low-level drive signals to drive a haptic output device to output a haptic effect. Such a drive signal may be amplified by an amplifier or may be converted from a digital to an analog signal, or from an analog to a digital signal using suitable processors or circuitry to accommodate the particular haptic output device being driven. Such conditioning circuitry may be part of a haptic output device, comprised within the housing 205, or located outside the housing 205 as long as the circuitry is capable of receiving information from the processor 210 and outputting a drive signal to haptic output device 240 and/or haptic output device 260.

A haptic output device, such as haptic output devices 240 or 260, can be any component or collection of components that is capable of outputting one or more haptic effects. For example, a haptic output device can be one of various types including, but not limited to, an eccentric rotational mass (ERM) actuator, a linear resonant actuator (LRA), a piezoelectric actuator, a voice coil actuator, an electro-active polymer (EAP) actuator, a shape memory alloy, a pager, a DC motor, an AC motor, a moving magnet actuator, an E-core actuator, a smartgel, an electrostatic actuator, an electrotactile actuator, a direct-neural stimulating actuator, a deformable surface, an electrostatic friction (ESF) device, an ultrasonic friction (USF) device, or any other haptic output device or collection of components that perform the functions of a haptic output device. Any component or combination of components that can perform the functions of a haptic output device or otherwise output a haptic effect is within the scope of this disclosure. Multiple haptic output devices or different-sized haptic output devices may be used to provide a range of vibrational frequencies, which may be actuated individually or simultaneously. Various embodiments may include a single or multiple haptic output devices and may have the same type or a combination of different types of haptic output devices.

In various embodiments, one or more haptic effects may be produced in any number of ways or in a combination of ways. For example, one or more vibrations may be used to produce a haptic effect, such as by rotating an eccentric mass or by linearly oscillating a mass. The haptic effect may be configured to impart a vibration to the entire electronic device or to only one surface or a limited part of the electronic device. Additionally or alternatively, friction between two or more components or friction between at least one component and at least one contact may be used to produce a haptic effect, such as by applying a brake to a moving component, such as to provide resistance to movement of a component or to provide a torque. Additionally or alternatively, deformation of one or more components can be used to produce a haptic effect. For example, one or more haptic effects may be output to change the shape of a surface or a coefficient of friction of a surface. For example, one or more haptic effects may be produced by creating electrostatic forces and/or ultrasonic forces that are used to change friction on a surface. Additionally or alternatively, an array of transparent deforming elements may be used to produce a haptic effect, such as one or more areas comprising a smartgel.

In Figure 2, the network interface 250 is in communication with the processor 210 and provides wired or wireless communications, from or to the electronic device 200 to or from other components or other devices. For example, the network interface 250 may provide wireless communications between the electronic device 200 and a wireless speaker or a wireless actuation device. In some embodiments, the network interface 250 may provide communications to one or more other devices, such as another electronic device 200, to allow users to interact with each other at their respective devices. The network interface 250 can be any component or collection of components that enables the preferably multi-pressure preferably touch-sensitive input electronic device 200 to communicate with another component or device. For example, the network interface 250 may comprise a PCI network adapter, a USB network adapter, or an Ethernet adapter. The network interface 250 may communicate using wireless Ethernet, including 802.11 a, g, b, or n standards. In one embodiment, the network interface 250 can communicate using Bluetooth, CDMA, TDMA, FDMA, or other wireless technology. Additionally or alternatively, the network interface 250 may communicate through a wired connection and may be in communication with one or more networks, such as Ethernet, token ring, USB, FireWire 1394, fiber optic, etc. And while the embodiment shown in Figure 2 comprises a network interface 250, other embodiments may not comprise a network interface 250.

### Illustrative System

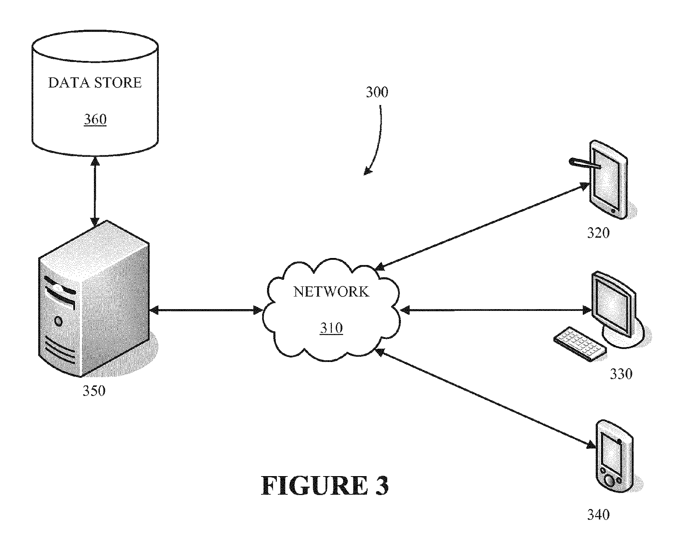

Referring now to **Figure 3****,** this figure illustrates a system diagram depicting illustrative computing devices in an illustrative computing environment according to an embodiment. The system 300 shown in Figure 3 includes three electronic devices, 320-340, and a web server 350. Each of the electronic devices, 320-340, and the web server 350 are connected to a network 310. Each of the electronic devices, 320-340, is in communication with the web server 350 through the network 310. Thus, each of the electronic devices, 320-340, can send requests to the web server 350 and receive responses from the web server 350 through the network 310.

The network 310 shown in Figure 3 facilitates communications between the electronic devices, 320-340, and the web server 350. The network 310 may be any suitable number or type of networks or links, including, but not limited to, a dial-in network, a local area network (LAN), wide area network (WAN), public switched telephone network (PSTN), a cellular network, a WiFi network, the Internet, an intranet or any combination of hard-wired and/or wireless communication links. In one embodiment, the network 310 is a single network. In other embodiments, the network 310 may comprise two or more networks. For example, the electronic devices 320-340 may be connected to a first network and the web server 350 may be connected to a second network and the first and the second network may be connected by a third network. Numerous other network configurations would be obvious to a person of ordinary skill in the art.

An electronic device may be capable of communicating with a network, such as network 310, and capable of sending and receiving information to and from another device, such as web server 350. For example, in Figure 3, one electronic device 320 is a tablet computer. The tablet computer 320 includes a touch-sensitive display and is able to communicate with the network 310 by using a wireless network interface card. Another device that may be an electronic device 330 shown in Figure 3 is a desktop computer. The desktop computer 330 is in communication with a display and is able to connect to the network 330 through a wired network connection. The desktop computer 330 may be in communication with any number of input devices such as a keyboard or a mouse. In Figure 3, a mobile phone is an electronic device 340. The mobile phone 340 may be able to communicate with the network 310 over a wireless communications means such as TDMA, CDMA, GSM, or WiFi.

A device receiving a request from another device may be any device capable of communicating with a network, such as network 310, and capable of sending and receiving information to and from another device. For example, in the system shown in Figure 3, the web server 350 may receive a request from another device (e.g., one or more of electronic devices 320-340) and may be in communication with network 310. A receiving device may be in communication with one or more additional devices, such as additional servers. For example, web server 350 in Figure 3 may be in communication with another server. A web server may communicate with one or more additional devices to process a request received from an electronic device. For example, web server 350 in Figure 3 may be in communication with a plurality of additional servers, at least one of which may be used to process at least a portion of a request from any of the electronic devices 320-340. In one embodiment, web server 350 may be part of or in communication with a content distribution network (CDN).

One or more devices may be in communication with a data store. In Figure 3, web server 350 is in communication with data store 360. Data store 360 may be operable to receive instructions from web server 350 and/or other devices in communication with data store 360 and obtain, update, or otherwise process data in response to receiving the instructions. Data store 360 may contain information associated with one or more electronic lists, data items, user accounts, metadata, haptic effects, user interactions, user history, or other information.

Data store 360 shown in Figure 3 can receive requests from web server 350 and send responses to web server 350. For example, web server 350 may request an electronic list of email messages for a particular email account. As another example, web server 350 may request the location of an image from data store 360. In response to receiving a request, data store 160 may send the requested information, such as information related to email messages or images, to the device that made the request. In embodiments, data store 360 can send receive, add, update, or otherwise manipulate information based at least in part on one or more requests received from another device or network, such as web server 350, network 310, or another network or device in communication with data store 360. For example, tablet computer 320 may initially receive an electronic document from web server 350 through network 310. The tablet computer 320 may request additional information associated with the electronic content from the web server 350, such as a number of current viewers of the electronic document or other information. The additional information may be requested by the tablet computer 320 in response to a user interaction with the electronic content on the tablet computer 320. The web server 350, in response to receiving the request from the tablet computer 320, may query data store 360 for information regarding the number of current viewers of the electronic document.

### Illustrative Method of Using Haptically Enabled Metadata

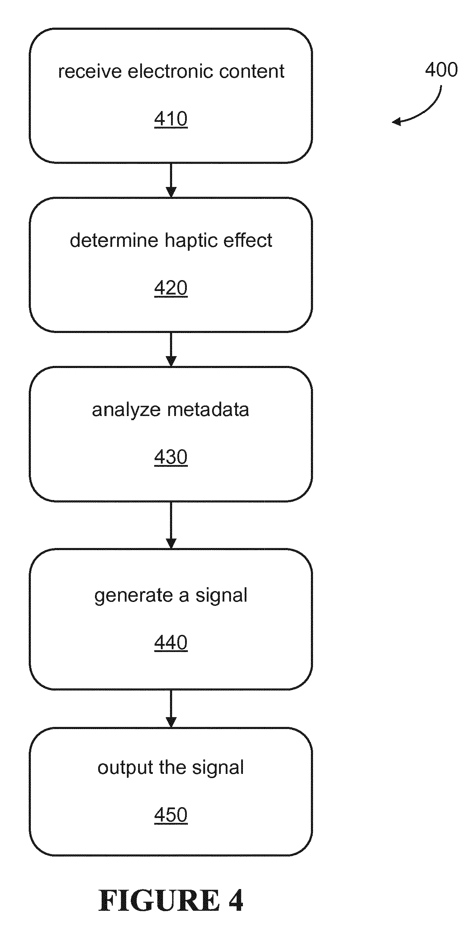

Referring now to **Figure 4,** Figure 4 illustrates a flow chart for a method 400 of using haptically enabled metadata in accordance with an embodiment of the present invention. The method 400 shown in Figure 4 will be described with respect to the electronic device 200 shown in Figure 2. The method 400 may be performed by any suitable device or devices, such as one or more of the devices shown in system 300 in Figure 3. For example, one or more of electronic devices 320-340 may perform method 400.

The method 400 begins in block 410 when electronic content is received by the electronic device 200. For example, the processor 210 may receive electronic content stored in memory 220. The processor 210 may receive electronic content from any number of storage devices (e.g., a hard disk drive, a flash drive, and/or a data store), other electronic devices, and/or through a network interface (such as 250) that is in communication with the processor 210. For example, referring to Figure 3, tablet computer 320 may receive electronic content from web server 350 through network 310. The electronic content may be sent to the electronic device 200 in response to a request sent by the electronic device to another device, such as a web server. Additionally or alternatively, the electronic content may be pushed from another device to the electronic device 200. For example, web server 350 may send electronic content to mobile phone 340 without mobile phone 340 requesting the electronic content from the web server 350. The electronic content can be received by an application, an applet, a plug-in, or a script being executed by the processor 210 on the electronic device 200.

The electronic content may comprise an electronic document. For example, the electronic content can include a digital book, eBook, eMagazine, Portable Document Format (PDF) file, word processing document such as a DOC file, text file, and/or another electronic document. The electronic content may comprise a web-based file. For example, the electronic content can be a web page, such as an HTML or PHP file, a blog, and/or other web-based content.

The electronic content may comprise one or more images, audio recordings, video recordings, live audio streams, live video streams, or a combination thereof. For example, the electronic content can include one or more electronic image files such as a GIF, JPG, PDF, PSP, PNG, TIFF, BMP, and/or other image files. The electronic content can include one or more electronic audio files such as WAV, M4A, WMA, MP3, MP4, and/or other audio files. The electronic content may include one or more video files such as FLV, MOV, MPEG, AVI, SWF, and/or other video files. The electronic content may include a combination of one or more types of files disclosed herein or other electronic files. For example, the electronic content may comprise a web page having text, audio, and video. The electronic content may comprise a user interface, a widget, other interactive content, or a combination thereof. For example, the electronic content can comprise a web page that includes script and/or program code for a user to "Like", "+1", or otherwise provide an indication about the web page. Numerous other examples are disclosed herein and other variations are within the scope of this disclosure.

The electronic content can be in any number of formats and/or written in any number of languages. For example, the electronic content may comprise a web page written in HTML and JavaScript. The electronic content may be written in one or more of the following languages, including but not limited to: ActionScript, ASP, C, C++, HTML, JAVA, JavaScript, JSON, MXML, PHP, XML, or XSLT. The electronic content may be written in one or more declarative languages, one or more procedural languages, or a combination thereof. The electronic content may comprise one or more text files. At least a portion of the electronic content may comprise a single file or alternatively the electronic content may comprise two or more files. If the electronic content comprises two or more files, all of the files may have the same file type or one or more of the files can have different file types. The electronic content may be in an archive or compressed format, such as JAR, ZIP, RAR, ISO, or TAR. In some embodiments, the electronic content may be compiled whereas in other embodiments the electronic content may not be compiled.

The electronic content may include an electronic list corresponding to a plurality of data items. The electronic list can include a list of email messages, a list of contacts, a list of images, another list, or a combination thereof. A data item in the plurality of data items may include an email message, a contact file such as an electronic business card, an image, another data file, or a combination thereof. For example, the electronic list may be a list corresponding to a plurality of email messages. The plurality of email messages may be associated with an email account of a user of the electronic device 200. The electronic list can contain information associated with at least a portion of the plurality of data items. For example, an electronic list corresponding to plurality of email messages, may contain information such as the sender of an email message, the recipient of an email message, a date and/or time that an email message was sent, and/or a subject message corresponding to an email message. The electronic list may contain a partial or "snippet" portion of the body of one or more email messages which can be obtained from at least a portion of the plurality of data items.

The electronic content may contain references to data items rather than the data items themselves. For example, electronic content may comprise a plurality of pointers to data items in another location of memory or located within another device, such as a remote server. Such a reference may include information usable by the electronic device to locate and/or retrieve the data item. For example, a reference can be a URL address, an absolute file location, or a relative file location corresponding to one or more data items. Thus, if the electronic content contains three references, then the first reference may provide an absolute location on a hard drive of the electronic device 200 where a first data item is stored, the second reference may provide a relative location in the memory of the electronic device 200 where a second data item is stored, and the third reference may provide a URL where a third data item is stored. Numerous other embodiments are disclosed herein and other variations are within the scope of this disclosure.

In addition to comprising data items and/or references to data items, the electronic content may comprise metadata. For example, electronic content may be comprised of a plurality of data structures connected together, each of the data structures corresponding to one entry in a list and comprising a plurality of data elements. For example, each element in a list may comprise an identifier (ID), a data item or a reference to a data item, and one or more data elements for storing metadata about the data item. For example, a list for use within an email program may comprise a plurality of nodes, where each node represents one email message and comprises a message identifier, a pointer to the email message, the name of the sender, the email address of the sender, a size of the email message, etc. The node may also contain an indication of the priority of the message. For example, a node may specify whether a message is of high importance, normal importance, or low importance. Other metadata such as keywords, categories, descriptions, etc., may be included within the list, or within one or more data nodes, or otherwise within the electronic content. Numerous other embodiments are disclosed herein and other variations are within the scope of this disclosure.

All or a portion of the electronic content need not comprise metadata. For example, referring to the example above, in one embodiment a first data item in the list perhaps contains metadata and a second data item in the list perhaps does not contain metadata. The list need not comprise metadata. Instead the list may comprise references to other data structures having metadata about the data items in the list. All or a portion of the electronic content might not contain metadata and, as described below, metadata may be determined for the electronic content. For example, if the electronic content is an image, then the image might not contain any metadata when received but the image may be analyzed using facial recognition to determine a person in the image and to generate corresponding metadata. Metadata corresponding to the determined person may then be stored in or in association with the image. As discussed below, at least a portion of the electronic content may contain metadata, optionally with all or a portion of the electronic content being analyzed to determine whether additional metadata should be associated with the electronic content.

The electronic content may comprise information usable by an electronic device to generate metadata based at least in part on a user's interaction with an electronic device and/or at least a portion of the electronic content. For example, a web page may contain a "Like" button and/or a "+1" button that a user can press to indicate that the user likes the web page. As discussed below, when such a "Like" or "+1" button scrolls onto the screen or is otherwise displayed, a haptic effect may be output to indicate the presence of the button. For example, after the user presses the "Like" button or a "+1" button, metadata is generated to indicate that a user likes at least a portion of the web page. When content is displayed, such as by being scrolled onto the screen, a haptic effect may be generated based on the generated metadata. Further, the metadata may indicate the number of "Likes" or "+1s," which may cause a different haptic effect to be output. Numerous other embodiments are disclosed herein and variations are within the scope of this disclosure.

The electronic list may comprise a subset of the data items in the plurality of data items. For example, an electronic list corresponding to a plurality of email messages, may contain one or more of the email messages in the plurality of email messages to which the electronic list corresponds. The electronic list may include one or more .msg files and/or other message-related files to which the electronic list corresponds. Additionally or alternatively the electronic list may include references, such as a logical location, a relative location, or a URL, to one or more email message files. As described above, the electronic list may include only email message files, or the electronic list may include information associated with a plurality of email messages but does not contain email message files. An electronic list may include both information associated with one or more email messages and one or more email message files.

The electronic content can include an electronic list corresponding to a plurality of images. For example, an electronic list that corresponds to a plurality of images associated with a photo album may be received by the processor 210. The electronic content may include an electronic list corresponding to a plurality of contacts. For example, the plurality of contacts may correspond with an address book of contacts associated with a user of the electronic device 200. The electronic content can include one or more electronic images files. For example, the electronic content can include electronic image files such as a GIF, JPG, PDF, PSP, PNG, TIFF, BMP, and/or other image files. The electronic content may include electronic audio files. For example, electronic content can include electronic audio files such as WAV, M4A, WMA, MP3, MP4, and/or other audio files. The electronic content may include electronic video files. For example, electronic video files may include electronic video files such as FLV, MOV, MPEG, AVI, SWF, and/or other video files. The electronic content may include one or more types of files. For example, the electronic content may include electronic lists, image files, audio files, or video files, or a combination thereof.

Referring again to method 400, once the electronic content has been received 410, the method 400 proceeds to block 420. In block 420, a haptic effect associated with an event is determined. In the present context, an "event" means an occurrence or happening of significance to the application, applet, plug-in, script or other program or task by which the electronic content can be received, in the present example this task or program being executed by the processor 210 on the electronic device 200. For example, an event may be determined when an image containing a particular person is initially displayed on the touch-sensitive display 230 on the electronic device 200. In this example the event may be determined by (a) determining that the image concerned is being displayed on screen for the first time and (b) determining from metadata associated with the image that the image contains the particular person. The event may be associated with a haptic effect configured to cause a vibration of the electronic device 200. Thus, the event could be triggered when an image containing the particular person is shown on the touch-sensitive display 230 as a user scrolls through the images in a photo album.

A haptic effect, an event, and/or an association between a haptic effect and an event may be determined based at least in part on information in a storage device, such as a hard disk drive or a data store. For example, electronic device 200 may access information stored in memory 220 to determine a haptic effect, an event, or an association between a haptic effect and an event. As another example, referring to Figure 3, desktop 330 may query data store 360 to determine a haptic effect associated with an event. For example, a storage device, such as data store 360, may contain a list of haptic effects, a list of events, and/or an association between one or more of the haptic effects and one or more of the events. Information about a haptic effect, an event, and/or an association between a haptic effect and an event contained in a storage device can be based on a user preference. For example, a user may assign a particular haptic effect to a particular event, such as a particular person being displayed on a display. As another example, a user may assign a particular keyword to be associated with a particular event.

A haptic effect, an event, and/or an association between a haptic effect and an event may be determined by an application, an applet, a plug-in, or a script executing on processor 210 of the electronic device 200. For example, programming code in an application may specify that a particular haptic effect be associated with a certain event. As another example, programming code in a plug-in may request that a user assign a haptic effect to a particular event. In another example, programming code in a script requests that a user assign an event to a particular haptic effect. As discussed above, information regarding the haptic effect, the event, and/or the association between a haptic effect and an event may be stored. Thus, a haptic effect, an event, or an association between a haptic effect and an event can be based on currently-provided or previously-provided user input.

A haptic effect, an event, and/or an association between a haptic effect and an event may be determined based at least in part on metadata within or associated with the electronic content. For example, a haptic effect, an event, and/or an association between a haptic effect and an event may be determined by analyzing metadata within an electronic list. Thus, if the electronic content is an electronic list associated with a plurality of data items, a haptic effect, an event, and/or an association between a haptic effect and an event may be determined by analyzing metadata within the electronic list. As another example, if the electronic content comprises a plurality of data items - such as email messages, images, and/or electronic business cards - a haptic effect, an event, and/or an association between a haptic effect and an event may be determined by analyzing metadata within one or more data items in the plurality of data items.

A haptic effect, an event, and/or an association may be determined based on keywords and/or descriptions within the metadata and/or based on specific haptic effects, events, and/or associations specified by the metadata within at least a portion of the electronic content. For example, metadata within one or more of the data items may be analyzed to determine whether the metadata contains a specific keyword. Thus, for example, if a data item contains the specific keyword then a particular haptic effect may be associated with that data item. Additionally or alternatively, metadata within an electronic list or a data item may indicate a particular category corresponding to the data item and the category may indicate a particular haptic effect, event, or association. Metadata within the electronic content may specify an importance of the data item. Thus, if an application executing on the electronic device 200 specifies that any data item of high importance should be associated with a particular haptic effect, then metadata within the data item may be analyzed to determine whether the metadata includes information specifying that the data item is of high importance. If the data item is determined to be of high importance, then the particular haptic effect is associated with that data item. Numerous other embodiments of determining a haptic effect, an event, and/or an association are disclosed herein and variations are within the scope of this disclosure.

The metadata within the electronic content may specify a haptic effect. For example, the metadata within at least a portion of the electronic content may provide "hapticEffectId=1123" which can be analyzed to determine that at least a portion of the electronic content is associated with a haptic effect having an identification of "1123". As one example, a database may be queried with a haptic effect identification to determine a haptic effect. As another example, if the electronic content is an electronic list corresponding to a plurality of data items and if one of the data items contains metadata specifying "hapticEffect=vibrate", then a vibrate haptic effect can be determined. As another example, the metadata within at least a portion of the electronic content may specify an absolute or relative location associated with a haptic effect. If the metadata within the electronic content specifies a URL for a haptic effect, then the metadata may be used to determine the haptic effect. Information associated with the haptic effect or the haptic effect itself may be retrieved. For example, if a URL associated with a haptic effect is determined, then the haptic effect may be downloaded using the URL. Additionally or alternatively, one or more haptic effects may be embedded within at least a portion of the electronic content. For example, one or more haptic effects may be embedded within an electronic list. As another example, one or more haptic effects may be embedded within a data item.

The metadata within the electronic content may specify an event. For example, the metadata within at least a portion of the electronic content may provide "eventId=43" which can be analyzed to determine that at least a portion of the electronic content is associated with an event [e.g. the event identified as "43" which is deemed to occur when that portion of the electronic content is on the display screen, or some other occurrence of significance identified as "43" happens in relation to that portion of the electronic content]. Thus, if the electronic content is an electronic list corresponding to a plurality of emails and metadata within the electronic list specifies "event=Haptic_If_Important", then the event may be determined to require a haptic signal to be generated if other metadata identifies that portion of the electronic content to be an email of high importance. As another example, the metadata within at least a portion of the electronic content may specify an absolute or relative location associated with an event. Thus, if the metadata within the electronic content specifies a location for the event, then the metadata may be analyzed to determine the event. Information associated with the event may be retrieved. For example, if a URL associated with an event is determined, then the information for the event may be downloaded from the URL. Information for one or more events may be embedded within at least a portion of the electronic content. For example, information for one or more events may be embedded within an electronic list. As another example, information for one or more events may be embedded within a data item.

The metadata within the electronic content may specify an association between a haptic effect and an event. For example, the metadata within at least a portion of the electronic content may provide "if eventId=2 then hapticId=3" which can be analyzed to determine that a haptic effect corresponding to a haptic identification of "3" is associated with an event corresponding to an event identification of "2". Thus, if the electronic content is an electronic list corresponding to a plurality of emails and metadata within one of the emails specifies "eventOnDisplay=vibrate", then a vibrating haptic effect may be determined to be associated with the event of a particular email being displayed on the display 230 of the electronic device 200.

Referring again to method 400, once a haptic effect associated with an event has been determined 420, the method 400 proceeds to block 430. In block 430, metadata within the electronic content is analyzed to determine that at least a portion of the electronic content is associated with the event. For example, if a particular haptic effect is associated with an event of a data item having a high priority, then metadata within the electronic content may be analyzed to determine that at least a portion of the electronic content has a high priority. Thus, if the electronic content is an electronic list corresponding to a plurality of email messages, then in one example, metadata within each of the plurality email messages may be analyzed to determine whether that email message has a high priority. In this example, if an email message has a high priority, then a determination may be made that the email message is associated with the event.

As another example, if a particular haptic effect is associated with an event of a particular person being in an image, then metadata, such as a description or keywords, within an image may be analyzed to determine whether the metadata indicates that the person is in the image. If the metadata within an image indicates that the person is in the image, then a determination may be made that the image is associated with the event. In another example, a haptic effect is associated with an event of metadata within the electronic content specifying a particular keyword. Thus, if a haptic effect is associated with an event of a particular contact being a "business contact" and if the electronic content is an electronic list of contacts, then metadata within the electronic list may be analyzed to determine whether any of the contacts is a "business contact".

Metadata associated with the electronic content may be generated. For example, a contact may be analyzed to determine a classification for the contact. For example, a contact may be analyzed to determine whether the contact is an important contact. In another example, an email may be analyzed to determine an importance, a relevancy, a keyword, or other metadata associated with the email. Other emails may be analyzed in determining whether a given email is important. Thus, previously defined metadata or previous user history may be used to generate metadata for a data item. The contents of an image may be analyzed to generate metadata associated with the image. For example, if an image contains a tree, then the image may be analyzed to determine that a keyword associated with the image should be "tree". The generated metadata may be stored. For example, if facial recognition software determines that a particular person is shown in an image and metadata corresponding to the particular person is generated for the image, then the metadata may be stored in or in association with the image. The generated metadata may be stored in a storage device memory 220 or data store 360.

Metadata may be generated in response to a user interaction with the electronic device 200. For example, a user may press a button on the electronic device that provides an indication whether the user likes at least a portion of the electronic content. Metadata may be generated when a user interacts with at least a portion of the electronic content. For example, the electronic content may comprise a blog having a plurality of entries. The electronic content may be configured such that when a blog entry is displayed on the display 230 of the electronic device 200 a button is also displayed on the display 230 that a user can press by contacting the touch-sensitive display 230 at a location corresponding to the button. When a user contacts the touch-sensitive display 230 at the location corresponding to the button, then metadata can be generated that indicates that the user likes that particular blog entry. Additionally or alternatively, a button may be displayed on the display 230 that, when pressed, indicates that the user likes a particular blog, webpage, etc.

Metadata may be generated when a user provides an annotation corresponding to at least a portion of the electronic content. Metadata may be generated when a user provides a rating for one or more data items displayed on a display 230. For example, metadata for a particular movie, genre, and/or category can be generated when a user rates the particular movie by selecting a number of stars for the movie, where the number of stars indicates the degree to which the user likes or dislikes the particular movie. Metadata may be generated when a user tags at least a portion of the electronic content. For example, a user may tag a person in an image, a place where an image was taken, or provide a title and/or description for an image. As another example, a user may highlight text within an electronic document, such as an eBook, and/or provide a comment associated with a particular portion of text within the electronic document. Metadata may be generated when one or more of any of these, or other, interactions occur.

At least a portion of the generated metadata may be based at least in part on a gesture and/or an applied pressure of one or more contacts on the electronic device 200. For example, metadata indicating that an email is associated with a haptic effect may be generated as a user contacts a location on the touch-sensitive display 230 corresponding to the email with a first pressure. If the user continues contacting the location and applies additional pressure, then metadata indicating that the email is associated with a different haptic effect may be generated. Additionally or alternatively, if the user continues contacting the location for a predetermined period of time, then metadata indicating that the email is associated with a different haptic effect may be generated. Thus, metadata associated with at least a portion of the electronic content can be generated based at least in part on one or more gestures, one or more contacts, one or more applied pressures, or a combination thereof.

Metadata can be analyzed and/or generated to determine any number of meanings for at least a portion of the electronic content. Metadata may be analyzed to determine a number of times the electronic content has been viewed and/or forwarded. For example, the metadata may indicate a number of times that a particular tweet has re-tweeted. The tweet may be associated with an event and/or a haptic effect if the metadata indicates that the tweet has been re-tweeted at least a certain number of times. In other words, the number of re-tweets is compared to a threshold value to determine whether the tweet is associated with an event and/or a haptic effect. The tweet may be compared to a different threshold value to determine whether the tweet is associated with a different event and/or haptic event. Metadata within at least a portion of the electronic content may be analyzed to determine a rating, an importance, whether the portion of the content has been read, a name, a place, a date, a title, a time, a number of times the portion of the content has been viewed, a location, a distance (e.g., a distance from a predetermined location or a distance from a current location), whether an item is selected, a sender, an origin, a destination, a folder, a category, a grouping, a size, an amount of data, an annotation, a comment, a number of comments, a tag, other indications, other meanings, or a combination thereof.

Referring again to method 400, after determining that at least a portion of the content is associated with the event by analyzing the metadata within the content 430, the method proceeds to block 440. In block 440, a signal is generated when the event occurs. For example, in an embodiment where the event involves an email message of high importance being displayed on the display 230 of the electronic device 200, then a signal is generated when an email message of high importance is displayed on the display.

The processor 210 may receive a signal from the touch-sensitive display 230 when a user contacts the touch-sensitive display 230 and the signal may include information associated with an input on, or a status of, the touch-sensitive display 230 such as the x, y location or pressure, or both, of a contact on the touch-sensitive display 230. If the user is viewing electronic content associated with a list of emails on the touch-sensitive display 230 of the electronic device 200 and if the processor 210 determines that the user is making a gesture in a direction towards the bottom of the display, then the processor 210 may determine that the touch-sensitive display 230 should be updated to scroll down the list of emails. A haptic effect may have previously been determined for an email message of high importance. A signal may be generated when information associated with an email message having a high importance is displayed on the display 230.

A signal may be generated before an email of high importance is actually displayed on the display 230. For example, as a user scrolls through the list of emails, the processor 210 may generate a signal as an email of high importance becomes closer to being displayed. In this way, a user may be notified that an important message is close by or approaching in the list. The timing for when a signal is generated may be based on a scrolling rate. For example, if a user is scrolling through a list of emails at a first rate then a signal may be generated as an important email approaches. If the user scrolls through the same list at a rate higher than the first rate, then the processor 210 may generate the signal more quickly. Thus, for example, if the processor 210 generates a signal when an important email message is three messages away when a user is scrolling through the list at the first rate, then the processor 210 may generate a signal when an important email message is five messages away in the list of emails when a user is scrolling through the list at a faster rate.

A signal may be generated the first time an event occurs. For example, if the event comprises a picture containing a dog being displayed on the display 230, then the first time that a particular image having a dog in the image is shown on the display 230, the processor 210 generates a signal. If a subsequent image is displayed on the display 230 and the image has a dog in the image, then another signal might not be generated. Alternatively, if a subsequent image is displayed on the display 230 and the image has a dog in the image, then the processor 210 may generate a signal based on the subsequent image.

A signal may be generated each time an event occurs. Thus, referring to the example above, each time the particular image having a dog in the image is displayed on the display 230, the processor 210 generates a signal. Therefore, if the image is associated with a photo album and the user scrolls by the image and then scrolls backwards so the image is displayed on the display for a second time, then the processor 210 would generate a signal twice. Alternatively, a signal may be generated only the first time the event occurs for a particular data item. In this example, the processor 210 generates a signal the first time that the user scrolls through the photo album but does not generate a signal subsequent times when the photo is displayed on the display 230.

One or more signals may be generated at any number of times based at least in part on the metadata within the content and/or the event. One or more signals may be generated when at least a portion of the electronic content is output by the electronic device 200. For example, a signal can be generated when at least a portion of the electronic content associated with an event is displayed on the display 230 of the electronic device 200. One or more signals may be generated when at least a portion of the electronic content appears or disappears. For example, a signal may be generated when a particular email in a list of emails no longer is displayed on display 230. As another example, a signal can be generated when a particular email in a list of emails appears on the display 230 of the electronic device 200. Additionally or alternatively, one or more signals may be generated when changes to the metadata are made, when a user contacts a location on a touch-sensitive display corresponding to a particular object, when an object is moved, when an object stops moving, etc. For example, an image may "slide" across display 230 until the image reaches a particular location on the display 230. A signal may be generated when the image begins "sliding" across the display, while the image is "sliding" across the display, and/or when the image stops "sliding" (e.g., when the image "clicks" into place). Numerous other embodiments are disclosed herein and variations are within the scope of this disclosure.

The processor 210 may generate a single signal when the event occurs. For example, the processor 210 may generate a signal configured to cause a haptic output device, such as haptic output device 240 or haptic output device 260, to output a haptic effect. The haptic effect may indicate that a data item is currently displayed on the display 230, that a data item is about to be displayed on the display 230, that a data item is approaching, that an event has occurred, or a combination thereof. The haptic effect may also indicate an importance, a priority, a relevancy, or that a data item is associated with a particular object - such as a name, a number, a keyword, a description, etc. - or a combination thereof.

Alternatively, the processor 210 may generate two, three, or more signals. For example, the processor 210 may generate a first signal configured to cause a first haptic effect and a second signal configured to cause a second haptic effect. The processor 210 may generate a different signal for each event that occurs. The processor 210 may generate one or more signals configured to cause appropriate functioning or response of the touch-sensitive display 230, the network interface 250, the haptic output device 240, the haptic output device 260, the speaker 270, other components of the device 200, other components of devices in communication with the device 200, or a combination thereof. For example, the processor 210 may generate a signal when the event occurs where the signal is configured to cause a haptic output device in another device to cause a haptic effect. The processor 210 may send the signal to the other device through the network interface 250.

A generated signal may include a command for a device or component to perform a specified function, such as to output a haptic effect or transmit a message to a remote device. Such a generated signal may include parameters which are used by a device or component receiving the command to determine a response or some aspect of a response. Parameters may include various data related to, for example, magnitudes, frequencies, durations, or other parameters that a haptic output device can use to determine a haptic effect, output a haptic effect, or both. For example, the processor 210 may generate a signal configured to cause haptic output device 240 to output a haptic effect. The signal may include a pressure parameter that the haptic output device 240 uses to determine the intensity of the haptic effect to output. For example, the larger the pressure parameter the haptic output device 240 receives, the more intense the haptic effect that is output.

An intensity parameter may be used by a haptic output device to determine the intensity of a haptic effect. The greater the intensity parameter, the more intense the haptic effect that is output. The intensity parameter may be based at least in part on the rate of scrolling when an event occurs. Thus, a larger intensity parameter may be sent to a haptic output device when an event occurs while the user is scrolling through a list faster than when an event occurs while the user is scrolling through the list slowly. A signal may include data that is configured to be processed by a haptic output device, display, network interface, speaker, or other component of a device or of another device in communication with the device in order to determine an aspect of a particular response.

Referring again to Figure 4, once a signal has been generated as specified in block 440, the next step of method 400 is to output the signal as shown in block 450. For example, the processor 210 may have generated a first signal configured to cause haptic output device 240 to output a haptic effect. In this example, the processor 210 outputs the signal to haptic output device 240. As another example, where the processor 210 generated a first haptic output signal configured to cause haptic output device 240 to output a first haptic effect and generated a second haptic output signal configured to cause haptic output device 260 to output a second haptic effect, the processor 210 outputs the first haptic output signal to haptic output device 240 and the second haptic output signal to haptic output device 260.

The processor 210 may output one or more generated signals to any number of devices. For example, the processor 210 may output one signal to the network interface 250. The processor 210 may output one generated signal to the touch-sensitive display 230, another generated signal to the network interface 250, and another generated signal to the haptic output device 260. The processor 210 may output a single generated signal or a given generated signal to multiple components or devices. For example, the processor 210 may output one generated signal to both haptic output device 240 and haptic output device 260. As another example, the processor 210 may output one generated signal to haptic output device 240, haptic output device 260, and network interface 250. As still another example, the processor 210 may output one generated signal to both haptic output device 240 and haptic output device 260 and output a second generated signal to the touch-sensitive display 230.

As discussed above, the processor 210 may output one or more signals to the network interface 250. For example, the processor 210 may output a signal to the network interface 250 instructing the network interface 250 to send data to another component or device in communication with the device 200. The network interface 250 may send data to the other device and the other device may perform a function such as updating a display associated with the other device or the other device may output a haptic effect. Thus, a second device may output a haptic effect or perform another function based at least in part upon an interaction with a first device in communication with the second device. A second device may perform any number of functions such as, for example, updating a display associated with the second device or outputting a sound to a speaker associated with the second device, based at least in part on an interaction with a first preferably multi-pressure preferably touch-sensitive input device 200.

After the processor 210 outputs a signal to a component, the component may send the processor 210 a confirmation indicating that the component received the signal. For example, haptic output device 260 may receive a command from the processor 210 to output a haptic effect. Once haptic output device 260 receives the command, the haptic output device 260 may send a confirmation response to the processor 210 that the command was received by the haptic output device 260. The processor 210 may receive completion data indicating that a component not only received an instruction but that the component has performed a response. For example, haptic output device 240 may receive various parameters from the processor 210. Based on these parameters haptic output device 240 may output a haptic effect and send the processor 210 completion data indicating that haptic output device 240 received the parameters and outputted a haptic effect.

### Illustrative Method of Using Haptically Enabled Metadata

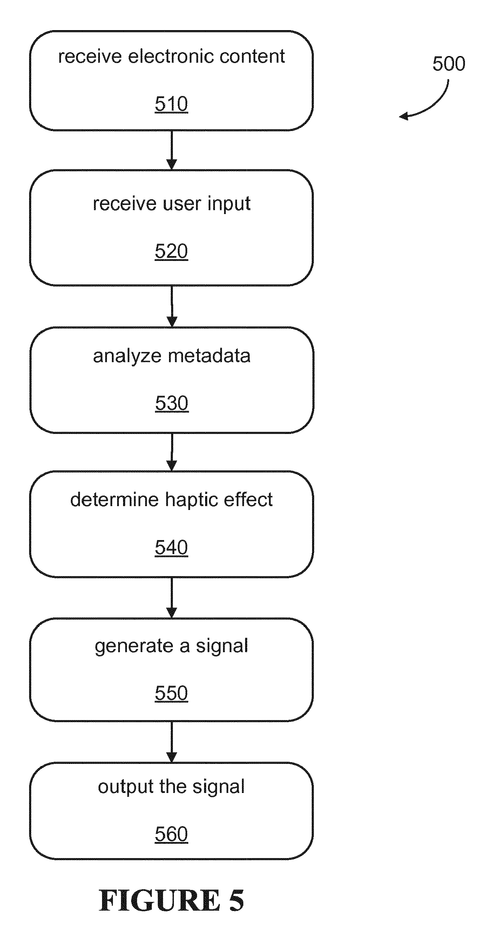

Referring now to **Figure 5,** Figure 5 illustrates a flow chart directed to a method 500 of using haptically enabled metadata in accordance with an embodiment of the present invention. The method 500 shown in Figure 5 will be described with respect to the electronic device 200 shown in Figure 2. The method 500 may be performed by one or more of the devices shown in system 300 in Figure 3, or any other suitable device or devices. For example, one or more of electronic devices 320-340 may perform method 500.

The method 500 begins in block 510 when content is received by the electronic device 200. For example, the processor 210 may receive electronic content stored in memory 220. The processor 210 may receive electronic content from any number of storage devices such as a hard disk drive, a flash drive, and/or a data store that is in communication with the processor 210. The electronic device 200 can receive electronic content through network interface 250. For example, referring to Figure 3, desktop computer 330 may receive electronic content from web server 350 through network 310. The electronic content may be sent to the electronic device in response to a request sent by the electronic device to another device, such as a web server. Additionally or alternatively, the electronic content may be pushed from another device to the electronic device 200. For example, referring to Figure 3, web server 350 may send electronic content to mobile phone 340 without mobile phone 340 requesting the electronic content from the web server. The electronic device 200 may receive electronic content from one or more data stores, such as data store 360, and/or other electronic devices, such as electronic devices 320-340. The electronic content may be received by an application, an applet, a plug-in, or a script being executed by the processor 210 on the electronic device 200.

The electronic content may comprise an electronic document. For example, the electronic content can include a digital book, eBook, eMagazine, Portable Document Format (PDF) file, word processing document such as a DOC file, text file, and/or another electronic document. The electronic content may comprise a web-based file. For example, the electronic content may comprise a web page, a blog, a tweet, an email, an RSS feed, an XML file, a playlist, or a combination thereof.

The electronic content may comprise one or more images, audio recordings, video recordings, live audio streams, live video streams, or a combination thereof. For example, the electronic content can include one or more electronic image files such as GIF, JPG, PDF, PSP, PNG, TIFF, BMP, and/or other image files. The electronic content can include one or more electronic audio files such as WAV, M4A, WMA, MP3, MP4, and/or other audio files. The electronic content may include one or more video files such as FLV, MOV, MPEG, AVI, SWF, and/or other video files. The electronic content may include a combination of one or more types of files disclosed herein or other electronic files. For example, the electronic content may comprise a web page having text, audio, and video. The electronic content may comprise a user interface, a widget, other interactive content, or a combination thereof. For example, the electronic content can comprise a web page that includes script and/or program code for a user to "Like", "+1", or otherwise provide an indication about the web page. Numerous other examples are disclosed herein and other variations are within the scope of this disclosure.

The electronic content can be in any number of formats and/or written in any number of languages. For example, the electronic content may comprise a web page written in PHP, CSS, and JavaScript. The electronic content may be written in one or more of the following languages, including but not limited to: ActionScript, ASP, C, C++, HTML, JAVA, JavaScript, JSON, MXML, PHP, XML, or XSLT. The electronic content may be written in one or more declarative languages, one or more procedural languages, or a combination thereof. The electronic content may comprise one or more text files. At least a portion of the electronic content may comprise a single file or alternatively the electronic content may comprise two or more files. If the electronic content comprises two or more files, all of the files may have the same file type or one or more of the files can have different file types. The electronic content may be in an archive or compressed format, such as JAR, ZIP, RAR, ISO, or TAR. The electronic content may be compiled whereas in other embodiments the electronic content may not be compiled.

The electronic content may include an electronic list corresponding to a plurality of data items. The electronic list can include a list of email messages, a list of contacts, a list of images, another list, or a combination thereof. A data item in the plurality of data items can include an email message, a contact file such as an electronic business card, an image, another data file, or a combination thereof. For example, an electronic list may be a list corresponding to a plurality of email messages. The plurality of email messages may be associated with an email account of a user of an electronic device. The electronic list can contain information associated with at least a portion of the plurality of data items. For example, an electronic list corresponding to plurality of email messages, may contain information such as the sender of an email message, the recipient of an email message, a date and/or time that an email message was sent, and/or a subject message corresponding to an email message. The electronic list may contain a partial or "snippet" portion of the body of one or more email messages. An electronic list may contain information obtained from at least a portion of the plurality of data items.

The electronic content may contain references to data items rather than the data items themselves. For example, electronic content may comprise a plurality of pointers to data items in another location of cache or located within another device, such as a remote server. A reference may include information usable by the electronic device to locate and/or retrieve the data item. For example, a reference can be a URL address, an absolute file location, or a relative file location corresponding to one or more data items. Thus, if the electronic content contains three references, then the first reference may provide a relative location on a flash drive of the electronic device 200 where a first data item is stored, the second reference may provide a relative location in the memory of the electronic device 200 where a second data item is stored, and the third reference may provide a location of a remote storage device where a third data item is stored. Numerous other embodiments are disclosed herein and other variations are within the scope of this disclosure.

In addition to comprising data items and/or references to data items, the electronic content may comprise metadata. For example, electronic content may be comprised of a plurality of data structures connected together, each of the data structures corresponding to one entry in a list and comprising a plurality of data elements. For example, each element in a list may comprise an identifier (ID), a data item or a reference to a data item, and one or more data elements for storing metadata about the data item. For example, a list for use within an email program may comprise a plurality of nodes, where each node represents one email message and comprises a message identifier, a pointer to the email message, the name of the sender, the email address of the sender, a size of the email message, etc. The node may also contain an indication of the priority of the message. For example, a node may specify whether a message is of high importance, normal importance, or low importance. Other metadata such as keywords, categories, descriptions, etc., may be included within the list, within the one or more data nodes, or otherwise within the electronic content. Numerous other embodiments are disclosed herein and other variations are within the scope of this disclosure.

All or a portion of the electronic content need not comprise metadata. For example, referring to the example above, a first data item in the list perhaps contains metadata and a second data item in the list perhaps does not contain metadata. The list need not comprise metadata. Instead, the list may comprise references to other data structures having metadata about the data items in the list. All or a portion of the electronic content might not contain metadata and, as described below, metadata may be determined for the electronic content. For example, if the electronic content is an image, then the image might not contain any metadata when received but the image may be analyzed using facial recognition to determine a person in the image and to generate corresponding metadata. Metadata corresponding to the determined person may then be stored in or in association with the image. As discussed below, at least a portion of the electronic content may contain metadata, optionally with all or a portion of the electronic content being analyzed to determine whether additional metadata should be associated with the electronic content.

The electronic content may comprise information usable by an electronic device to generate metadata based at least in part on a user's interaction with an electronic device and/or at least a portion of the electronic content. For example, a blog may contain a tag, description, and/or comment input field that a user can enter text into to specify information about a blog entry. For example, when a user enters information about an image, such as the names of one or more persons in the image or a category or other tag for the image, metadata is generated in response to the user's interaction with the image. Numerous other embodiments are disclosed herein and variations are within the scope of this disclosure.

The electronic list may comprise a subset of the data items in the plurality of data items. For example, an electronic list corresponding to a plurality of email messages, may contain one or more of the email messages in the plurality of email messages to which the electronic list corresponds. As another example, an electronic list can include one or more .msg files and/or other message-related files to which the electronic list corresponds. Additionally or alternatively an electronic list may include a reference, such as a logical location, a relative location, or a URL, to one or more email message files. The electronic list may include only email message files. The electronic list may include information associated with a plurality of email messages but not contain email message files. Yet alternatively, an electronic list may include both information associated with one or more email messages and one or more email message files.

The electronic content may include an electronic list corresponding to a plurality of images. For example, an electronic list that corresponds to a plurality of images associated with a photo album may be received by the processor 210. Alternatively, the electronic content may include an electronic list corresponding to a plurality of contacts. The plurality of contacts may correspond with an address book of contacts associated with a user of the electronic device 200. The electronic content may include one or more electronic image files. For example, the electronic content can include electronic image files such as a GIF, JPG, PDF, PSP, PNG, TIFF, BMP, and/or other image files. The electronic content may include electronic audio files. For example, electronic content can include electronic audio files such as WAV, M4A, WMA, MP3, MP4, and/or other audio files. The electronic content may include electronic video files. For example, electronic video files may include electronic video files such as FLV, MOV, MPEG, AVI, SWF, and/or other video files. The electronic content may include one or more types of files. For example, the electronic content may include electronic lists, image files, audio files, or video files, or a combination thereof.

Referring again to method 500, once content has been received 510, the method 500 proceeds to block 520. In block 520, user input is received by the electronic device through one or more input devices.

In one embodiment, the processor 210 receives a signal from the touch-sensitive display 230 when a user contacts the touch-sensitive display 230 and the signal includes information associated with an input on, or a status of, the touch-sensitive display 230 such as the x, y location or pressure, or both, of a contact on the touch-sensitive display 230. In this embodiment, if the user is viewing a portion of an electronic list on the touch-sensitive display 230 of the electronic device 200 and if the processor 210 determines that the user is making a contact at a location or in a manner corresponding to a request to scroll down the electronic list, then the processor 210 determines that the touch-sensitive display 230 should be updated to scroll down the electronic list. Similarly, if the user is viewing a portion of the electronic list on the touch-sensitive display 230 of the electronic device 200 and if the processor 210 determines that the user is making a contact at a location or in a manner corresponding to a request to scroll up the electronic list, then the processor 210 determines that the touch-sensitive display 230 should be updated to scroll up the electronic list. At least a portion of the electronic content may be shown on the display 230 of the electronic device 200 in response to a user interaction with the device. For example, a user may be able to scroll up, down, to the left, and/or to the right through various portions of a web page by making contacts and/or gestures on the display 230.

If the user is viewing electronic content associated with a list of contacts on the touch-sensitive display 230 of the electronic device 200 and if the processor 210 determines that the user is making a gesture in a direction towards the bottom of the display, then the processor 210 may determine that the touch-sensitive display 230 should be updated to scroll downward through the contacts in the list of contacts. User input may be received through any number of input devices. As discussed above, user input may be received by contacting and/or making gestures on the touch-sensitive display 230 of the electronic device 210. Additionally or alternatively, user input may be received by an electronic device through user interaction with a mouse, a keyboard, a button, a speaker, a microphone, another suitable input device, or a combination thereof.

A user interaction with the electronic device 200 can cause metadata to be generated. For example, a user may contact a location on the touch-sensitive display 230 that corresponds with at least a portion of the electronic content and provides an indication for a portion of the electronic content. For example, a user may press a location on the display 230 corresponding to a retail product displayed on the display 230. Metadata may be generated based on the number of times that the user contacts a location on the display 230 corresponding to the product. For example, the more times that contacts are made on the display 230 in locations corresponding to the product, the greater may be the indication that the user has a favorable impression of the product. Metadata that specifies or otherwise indicates the user's impression of the product may be generated.

Metadata may be generated based at least in part on a user's gesture and/or applied contact pressure on the electronic device 200. For example, at least a portion of the generated metadata may be based at least partly on a gesture and/or an applied pressure of one or more contacts on the touch-sensitive display 230 of the electronic device 200. For example, metadata indicating that a blog entry should be associated with a haptic effect may be generated as a user contacts a location on the touch-sensitive display 230 corresponding to the blog entry with a first pressure. If the user continues contacting the location and applies additional pressure, then metadata indicating that the blog entry should be associated with a different haptic effect may be generated. Additionally or alternatively, if the user continues contacting the location for a predetermined period of time, then metadata indicating that the blog entry is associated with a different haptic effect may be generated. Thus, metadata associated with at least a portion of the electronic content can be generated based at least in part on one or more gestures, one or more contacts, one or more applied pressures, other user interactions with the electronic device 200, or a combination thereof.

A user interaction with the electronic device 200 can cause metadata to be requested from a remote device. For example, a user may make a gesture on the display 230 which causes an electronic list of contacts to scroll downward. Metadata regarding the new contacts being shown on the display 230 may be requested by the electronic device 200. Additionally or alternatively, metadata may be requested from a remote device at various times specified by the electronic content and/or the electronic device 200. For example, metadata associated with the electronic content being displayed on a display associated with the electronic device 200 may be requested at a predetermined interval. Thus, if the electronic device 200 receives an electronic list of contacts, then metadata regarding at least a portion of the contacts in the electronic list may be requested every 500 ms or at another predetermined time interval. For example, the electronic device 200 may receive metadata from a remote device every second for each contact in an electronic list of contacts that indicates whether that contact is currently online. Additionally or alternatively, additional metadata associated with at least a portion of the electronic content may be pushed to the electronic device 200 from a remote device. For example, if the electronic device 200 receives an electronic document, then metadata associated with the electronic document may be pushed to the electronic device 200. For example, metadata indicating the number of people currently viewing the electronic document may be pushed to the electronic document 200.

Metadata received by the electronic device 200 can indicate any number of activities. The metadata may indicate whether a new version of an application, plug-in, etc. is available or whether a new update of an application, plug-in, etc. is available. The metadata may indicate one or more status updates such as a number of comments that have been made, a number of likes, a number of tweets, a number of re-tweets, a number of readers, a total number of purchases, a number of purchases within a period of time, a number of reviews, a number of positive reviews, a number of negative reviews, a number of ratings, a ratings quality, other indications associated with at least a portion of the electronic content, or a combination thereof. The metadata can indicate context trending associated with at least a portion of the electronic content. For example, metadata can indicate whether readers of at least a portion of the electronic content are shocked by the article, enjoyed the article, were bored by the article, other context trending information, or a combination thereof. As another example, metadata indicating context trending for at least a portion of the electronic content may indicate whether sales have recently increased or decreased for the electronic content or a product associated with the electronic content. Numerous other embodiments are disclosed herein and variations are within the scope of this disclosure.

The additional metadata received from a remote device may be used by the electronic device 200 to generate and/or output one or more haptic effects. For example, a haptic effect may be output when metadata indicating that a contact that was previously off-line becomes available is pushed to the electronic device 200. The additional metadata received by the electronic device 200 may indicate a trend for at least a portion of the received electronic content. Thus, if a particular item of electronic content has at least a first number of likes or +1s or other indicator of popularity then the electronic device 200 may generate a first haptic effect. However, if the electronic content has at least a second number of likes or +1s or other indicator of popularity that is greater than the first number but less than a second number then the electronic device 200 may generate a second haptic effect. The second haptic effect may be configured to have a greater intensity than the first haptic effect. Therefore, the haptic effect output by the electronic device 200 can indicate the level of interest or popularity of at least a portion of the electronic content based at least in part on the haptic effect and/or the intensity of the haptic effect. Numerous other embodiments are disclosed herein and variations are within the scope of this disclosure.

Referring again to method 500, once user input is received 520, the method 500 proceeds to block 530. In block 530, metadata within the content is analyzed. For example, metadata, such as keywords or a description, within a data item in an electronic list of the received electronic content may be analyzed to determine a priority for the data item. As another example, metadata that is received after the electronic content can be analyzed. This metadata may be analyzed when it is received or at another time after the metadata is received by the electronic device 200.

Metadata within the electronic content may be analyzed when the electronic device 200 receives the electronic content. For example, metadata within an electronic list corresponding to a plurality of data items or metadata within one or more data items, or both, may be analyzed when the electronic device 200 receives the electronic content. Metadata within a portion of the electronic content may be analyzed when the portion of the electronic content is displayed on the display 230 of the electronic device 200. Metadata within a portion of the electronic content may be analyzed before the portion of the electronic content is displayed on the display 230 of the electronic device 200. For example, if the electronic content is an electronic list containing a plurality of emails and if email number three in the electronic list of emails is currently displayed on the display 230, then the metadata within emails numbered four through seven in the electronic list of emails may be analyzed.

A haptic effect, an event, and/or an association between a haptic effect and an event may be determined based at least in part on metadata within or associated with the electronic content. For example, a haptic effect, an event, and/or an association between a haptic effect and an event may be determined by analyzing metadata within an electronic list. For example, if the electronic content is an electronic list associated with a plurality of data items, a haptic effect, an event, and/or an association between a haptic effect and an event may be determined by analyzing metadata within the electronic list. As another example, if the electronic content comprises a plurality of data items - such as email messages, images, and/or electronic business cards - a haptic effect, an event, and/or an association between a haptic effect and an event may be determined by analyzing metadata within one or more data items in the plurality of data items.

A haptic effect, an event, and/or an association may be determined based on keywords and/or descriptions within the metadata and/or based on specific haptic effects, events, and/or associations specified by the metadata within at least a portion of the electronic content. For example, metadata within one or more of the data items may be analyzed to determine whether the metadata contains a specific keyword. Thus, for example, if a data item contains the specific keyword then a particular haptic effect may be associated with that data item. Metadata within an electronic list or a data item may indicate a particular category corresponding to the data item and the category may indicate a particular haptic effect, event, or association. Metadata within the electronic content may specify an importance of the data item. Thus, if an application executing on the electronic device 200 specifies that any data item of high importance should be associated with a particular haptic effect, then metadata within the data item may be analyzed to determine whether the metadata includes information specifying that the data item is of high importance. If the data item is determined to be of high importance, then the particular haptic effect is associated with that data item. Numerous other embodiments of determining a haptic effect, an event, and/or an association are disclosed herein and variations are within the scope of this disclosure.

The metadata within the electronic content may specify a haptic effect. For example, the metadata within at least a portion of the electronic content may provide "hapticEffectId=1123" which can be analyzed to determine that at least a portion of the electronic content is associated with a haptic effect having an identification of "1123". As one example, a database may be queried with a haptic effect identification to determine a haptic effect. As another example, if the electronic content is an electronic list corresponding to a plurality of data items and if one of the data items contains metadata specifying "hapticEffect=vibrate", then a vibrate haptic effect can be determined. As another example, the metadata within at least a portion of the electronic content may specify an absolute or relative location associated with a haptic effect. If the metadata within the electronic content specifies a URL for a haptic effect, then the metadata may be used to determine the haptic effect. Information associated with the haptic effect or the haptic effect itself may be retrieved. For example, if a URL associated with a haptic effect is determined, then the haptic effect may be downloaded using the URL. Additionally or alternatively, one or more haptic effects may be embedded within at least a portion of the electronic content. For example, one or more haptic effects may be embedded within an electronic list. As another example, one or more haptic effects may be embedded within a data item.

The metadata within the electronic content may specify an event. For example, the metadata within at least a portion of the electronic content may provide "eventId=43" which can be analyzed to determine that at least a portion of the electronic content is associated with an event [e.g. the event identified as "43" which is deemed to occur when that portion of the electronic content is on the display screen, or when some other occurrence of significance identified as "43" happens in relation to that portion of the electronic content]. Thus, if the electronic content is an electronic list corresponding to a plurality of emails and metadata within the electronic list specifies "event=Haptic_If_Important", then the event may be determined to require a haptic signal to be generated if other metadata identifies that portion of the electronic content to be an email of high importance. As another example, the metadata within at least a portion of the electronic content may specify an absolute or relative location associated with an event. Thus, if the metadata within the electronic content specifies a location for the event, then the metadata may be analyzed to determine the event. Information associated with the event may be retrieved. For example, if a URL associated with an event is determined, then the information for the event may be downloaded from the URL. Information for one or more events may be embedded within at least a portion of the electronic content. For example, information for one or more events may be embedded within an electronic list. As another example, information for one or more events may be embedded within a data item.

The metadata within the electronic content may specify an association between a haptic effect and an event. For example, the metadata within at least a portion of the electronic content may provide "if eventId=2 then hapticId=3" which can be analyzed to determine that a haptic effect corresponding to a haptic identification of "3" is associated with an event corresponding to an event identification of "2". Thus, if the electronic content is an electronic list corresponding to a plurality of emails and metadata within one of the emails specifies "eventOnDisplay=vibrate", then a vibrating haptic effect may be determined to be associated with the event of a particular email being displayed on the display 230 of the electronic device 200.

The metadata within a data item in the electronic content may specify one or more keywords associated with the data item. For example, if the data item is an image, then the metadata may specify a person in the image, a location of the image, an object in the image, other information identifying a portion of the image, a category, a priority, a relevancy, a haptic effect, an event, other information associated with the image, or a combination thereof. As another example, if the data item is an email message, then the metadata may specify an importance of the email, a sender, a recipient, a sent timestamp, a received timestamp, an email identifier, other information, or a combination thereof. As discussed above, metadata may be generated by analyzing the contents of a data item. Thus, an image may be analyzed to determine one or more objects in the image. Information associated with the determined object(s) may be stored as metadata in or associated with the image.

Referring again to method 500, after analyzing metadata within the content 530, the method proceeds to block 540. In block 540, a haptic effect is determined. For example, if metadata within an email message is analyzed and a priority for the email message is determined, then a haptic effect corresponding to the priority may be determined. As discussed above, a haptic effect may be determined based at least in part on the analyzed metadata within the electronic content.

A storage device, such as data store 360, comprising a plurality of haptic effects may be accessed to determine a haptic effect. For example, data store 360 may be queried to determine a haptic effect associated with an email message having a particular priority level. As another example, data store 360 can be queried to determine a haptic effect associated with a contact having a particular importance. Data store 360 may be queried to determine a haptic effect corresponding to a contact associated with a particular category of contacts.

A haptic effect may be determined by an application, an applet, a plug-in, or a script executing on processor 210 of the electronic device 200. For example, programming code in an application may specify that a particular haptic effect be associated with a certain event. As another example, programming code in a plug-in may request that a user assign a haptic effect to a particular object. As yet another example, programming code in a script may request that a user assign an event to a particular haptic effect. As discussed above, information regarding the haptic effect, the event, and/or the association between a haptic effect and an event may be stored. Thus, a haptic effect, an event, or an association between a haptic effect and an event can be based on currently-provided or previously-provided user input.

A haptic effect may be determined based at least in part on metadata within the electronic content. A haptic effect may be determined by analyzing metadata within an electronic list. For example, if the electronic content is an electronic list associated with a plurality of data items, a haptic effect may be determined by analyzing metadata within the electronic list. As another example, if the electronic content comprises a plurality of data items - such as email messages, images, and/or electronic business cards - a haptic effect may be determined by analyzing metadata within one or more data items in the plurality of data items.

A haptic effect, an event, and/or an association may be determined based on keywords and/or descriptions within the metadata and/or based on specific haptic effects, events, and/or associations specified by the metadata within at least a portion of the electronic content. For example, metadata within one or more of the data items may be analyzed to determine whether the metadata contains a specific keyword. Thus, for example, if a data item contains the specific keyword then a particular haptic effect may be associated with that data item. Additionally or alternatively, metadata within an electronic list or a data item may indicate a particular category corresponding to the data item and the category may indicate a particular haptic effect, event, or association. Metadata within the electronic content may specify an importance of the data item. Thus, if an application executing on the electronic device 200 specifies that any data item of high importance should be associated with a particular haptic effect, then metadata within the data item may be analyzed to determine whether the metadata includes information specifying that the data item is of high importance. If the data item is determined to be of high importance, then the particular haptic effect is associated with that data item. Numerous other embodiments of determining a haptic effect, an event, and/or an association are disclosed herein and variations are within the scope of this disclosure.

The metadata within the electronic content may specify a haptic effect. For example, the metadata within at least a portion of the electronic content may provide "hapticEffectId=1123" which can be analyzed to determine that at least a portion of the electronic content is associated with a haptic effect having an identification of "1123". As one example, a database may be queried with a haptic effect identification to determine a haptic effect. As another example, if the electronic content is an electronic list corresponding to a plurality of data items and if one of the data items contains metadata specifying "hapticEffect=vibrate", then a vibrate haptic effect can be determined. As another example, the metadata within at least a portion of the electronic content may specify an absolute or relative location associated with a haptic effect. If the metadata within the electronic content specifies a URL for a haptic effect, then the metadata may be used to determine the haptic effect. Information associated with the haptic effect or the haptic effect itself may be retrieved. For example, if a URL associated with a haptic effect is determined, then the haptic effect may be downloaded using the URL. Additionally or alternatively, one or more haptic effects may be embedded within at least a portion of the electronic content. For example, one or more haptic effects may be embedded within an electronic list. As another example, one or more haptic effects may be embedded within a data item.

Metadata may be analyzed to determine a meaning for at least a portion of the electronic content. One or more haptic effects may be determined based at least in part on the determined meaning. For example, metadata can be analyzed to determine a number of times that at least a portion of the electronic content has been viewed and/or forwarded. For example, the metadata may indicate a number of times that a blog entry has been viewed or how many times a comment has been replied to. Such information may be used to determine an event and/or a haptic effect for the blog entry, the entire blog, the comment, or another portion of the electronic content. For example, if metadata is analyzed to determine a number of times that a comment has been replied to, then this information may be used to determine a popularity of the comment. If the popularity is determined to be a high popularity (e.g., above a threshold number of comments, above a certain percentage of total comments, above a predetermined percentage of total replies, etc.) then the comment may be associated with a first haptic effect and if the popularity is determined to be a medium popularity then the comment may be associated with a second haptic effect. Metadata within at least a portion of the electronic content may be analyzed to determine a rating, an importance, whether the portion of the content has been read, a name, a place, a date, a title, a time, a number of times the portion of the content has been viewed, a location, a distance (e.g., a distance from a predetermined location or a distance from a current location), whether an item is selected, a sender, an origin, a destination, a folder, a category, a grouping, a size, an amount of data, an annotation, a comment, a number of comments, a tag, other indications, other meanings, or a combination thereof. One or more haptic effects may be associated with at least a portion of the electronic content based at least in part on one or more of these determinations. Numerous additional embodiments are disclosed herein and variations are within the scope of this disclosure.

Referring again to method 500, after a haptic effect is determined 540, the method proceeds to block 550. In block 550, a signal is generated. For example, in one embodiment, a signal is generated when a contact associated with a particular category, such as "Family", is displayed on the display 230 of the electronic device 200, as the user navigates through the contacts in the contacts list. The generated signal is configured to cause one or more haptic output devices to output the determined haptic effect.

The processor 210 may receive a signal from the touch-sensitive display 230 when a user contacts the touch-sensitive display 230 and the signal may include information associated with an input on, or a status of, the touch-sensitive display 230 such as the x, y location or pressure, or both, of a contact on the touch-sensitive display 230. If the user is viewing electronic content associated with a list of emails on the touch-sensitive display 230 of the electronic device 200 and if the processor 210 determines that the user is making a gesture in a direction towards the bottom of the display, then the processor 210 may determine that the touch-sensitive display 230 should be updated to scroll down the list of emails. A haptic effect may have previously been determined for an email message of high importance. A signal may be generated when information associated with an email message having a high importance is displayed on the display 230.

A signal may be generated before an email of high importance is actually displayed on the display 230. For example, as a user scrolls through the list of emails, the processor 210 may generate a signal as an email of high importance becomes closer to being displayed. In this way, a user may be notified that an important message is close by or approaching in the electronic list. The timing for when a signal is generated may be based on a scrolling rate. For example, if a user is scrolling through a list of emails at a first rate then a signal may be generated as an important email approaches. If the user scrolls through the same list at a rate higher than the first rate, then the processor 210 may generate the signal more quickly. Thus for example, if the processor 210 generates a signal when an important email message is three messages away from being output (e.g., displayed on a display of an electronic device) when a user is scrolling through the list at the first rate, then the processor 210 may generate a signal when an important email message is five messages away from being output (e.g., displayed on a display of an electronic device) in the list of emails when a user is scrolling through the list at a faster rate.

A signal may be generated the first time an event occurs. For example, if the event comprises a picture containing a dog being displayed on the display 230, then the first time that a particular image having a dog in the image is shown on the display 230, the processor 210 generates a signal. If a subsequent image is displayed on the display 230 and the image has a dog in the image, then another signal might not be generated. Alternatively, if a subsequent image is displayed on the display 230 and the image has a dog in the image, then the processor 210 may generate a signal based on the subsequent image.

A signal may be generated each time an event occurs. Thus, referring to the example above, each time the particular image having a dog in the image is displayed on the display 230, the processor 210 generates a signal. Therefore, if the image is associated with a photo album and the user scrolls by the image and then scrolls backwards so the image is displayed on the display for a second time, then the processor 210 would generate a signal twice. Alternatively, a signal may be generated only the first time the event occurs for a particular data item. For example, the processor 210 generates a signal the first time that the user scrolls through the photo album but does not generate a signal subsequent times when the photo is displayed on the display 230.

One or more signals can be generated at any number of times based at least in part on the metadata within the content and/or the event. One or more signals may be generated when at least a portion of the electronic content is output by the electronic device 200. For example, a signal can be generated when a comment is displayed on the display 230 of the electronic device 200 and the comment was made by a favorite friend. As another example, one or more signals may be generated when at least a portion of the electronic content appears or disappears. For example, a signal may be generated when a song by a favorite artist is displayed on the display 230 as a user scrolls through a list of songs. As another example, a signal may be generated when a particular friend becomes available to chat and/or when a particular friend is no longer available to chat. A signal can be generated when a particular email in a list of emails appears on the display 230 of the electronic device 200. Additionally or alternatively, one or more signals may be generated when changes to the metadata are made, when a user contacts a location on a touch-sensitive display corresponding to a particular object, when an object is moved, when an object stops moving, etc. For example, images may "click" into place on the display 230 as a user scrolls through images of a photo album by making gestures on the touch-sensitive display 230. A signal may be generated when an image corresponding to a preferred location "clicks" into place. Numerous other embodiments are disclosed herein and variations are within the scope of this disclosure.

The processor 210 may generate a single signal when the event occurs. For example, the processor 210 may generate a signal configured to cause a haptic output device, such as haptic output device 240 or haptic output device 260, to output a haptic effect. The haptic effect may indicate that a data item is currently displayed on the display 230, that a data item is about to be displayed on the display 230, that a data item is approaching, that an event has occurred, or a combination thereof. The haptic effect may also indicate an importance, a priority, a relevancy, or that a data item is associated with a particular object - such as a name, a number, a keyword, a description, etc. - or a combination thereof.

Alternatively, the processor 210 may generate two, three, or more signals. For example, the processor 210 may generate a first signal configured to cause a first haptic effect and a second signal configured to cause a second haptic effect. The processor 210 may generate a different signal for each event that occurs. The processor 210 generates one or more signals configured to cause appropriate functioning or response of the touch-sensitive display 230, the network interface 250, the haptic output device 240, the haptic output device 260, the speaker 270, other components of the device 200, other components of devices in communication with the device 200, or a combination thereof. For example, the processor 210 may generate a signal when the event occurs where the signal is configured to cause a haptic output device in another device to cause a haptic effect. The processor 210 may send the signal to the other device through the network interface 250.

A generated signal may include a command for a device or component to perform a specified function, such as to output a haptic effect or transmit a message to a remote device. Such a generated signal may include parameters which are used by a device or component receiving the command to determine a response or some aspect of a response. Parameters may include various data related to, for example, magnitudes, frequencies, durations, or other parameters that a haptic output device can use to determine a haptic effect, output a haptic effect, or both. For example, the processor 210 may generate a signal configured to cause haptic output device 240 to output a haptic effect. The signal may include a pressure parameter that the haptic output device 240 uses to determine the intensity of the haptic effect to output. For example, the larger the pressure parameter the haptic output device 240 receives, the more intense the haptic effect that is output.

An intensity parameter may be used by a haptic output device to determine the intensity of a haptic effect. An intensity parameter may be used by a haptic output device to determine a frequency for a haptic effect. For example, the intensity parameter may be correlated with the frequency of the haptic effect such that the higher the intensity parameter received by the haptic output device, the lower the frequency that is determined for the haptic effect. Additionally or alternatively, an intensity parameter received by a haptic output device may be used by the haptic output device to determine durations, magnitudes, types of haptic effect, and/or other information associated with one or more haptic effects. For example, if an intensity value is received and the intensity value is above a first threshold, then the intensity value may indicate that a first haptic effect should be used. If the intensity value is below the first threshold but is above a second threshold, then the intensity value may indicate that a second haptic effect needs to be selected. The intensity parameter may be based at least in part on the rate of scrolling when an event occurs. Thus, a signal comprising a larger intensity parameter may be sent to a haptic output device when an event occurs while the user is scrolling through a list more quickly than when an event occurs while the user is scrolling through the list slowly. The signal may include data that is configured to be processed by a haptic output device, display, network interface, speaker, or other component of a device or of another device in communication with the device in order to determine an aspect of a particular response.

Referring again to Figure 5, once a signal has been generated as specified in block 550, the next step of method 500 is to output the signal as shown in block 560. For example, the processor 210 may have generated a first signal configured to cause haptic output device 240 to output a haptic effect. In this example, the processor 210 outputs the signal to haptic output device 240. As another example, where the processor 210 generated a first haptic output signal configured to cause haptic output device 240 to output a first haptic effect and generated a second haptic output signal configured to cause haptic output device 260 to output a second haptic effect, the processor 210 outputs the first haptic output signal to haptic output device 240 and the second haptic output signal to haptic output device 260.

The processor 210 may output one or more generated signals to any number of devices. For example, the processor 210 may output one signal to the network interface 250. The processor 210 may output one generated signal to the touch-sensitive display 230, another generated signal to the network interface 250, and another generated signal to the haptic output device 260. The processor 210 may output a single generated signal or a given generated signal to multiple components or devices. For example, the processor 210 may output one generated signal to both haptic output device 240 and haptic output device 260. As another example, the processor 210 may output one generated signal to haptic output device 240, haptic output device 260, and network interface 250. As still another example, the processor 210 may output one generated signal to both haptic output device 240 and haptic output device 260 and may output a second generated signal to the touch-sensitive display 230.

As discussed above, the processor 210 may output one or more signals to the network interface 250. For example, the processor 210 may output a signal to the network interface 250 instructing the network interface 250 to send data to another component or device in communication with the device 200. The network interface 250 may send data to the other device and the other device may perform a function such as updating a display associated with the other device or the other device may output a haptic effect. Thus, a second device may output a haptic effect or perform another function based at least in part upon an interaction with a first device in communication with the second device. A second device may perform any number of functions such as, for example, updating a display associated with the second device or outputting a sound to a speaker associated with the second device, based at least in part on an interaction with a first preferably multi-pressure preferably touch-sensitive input device 200.

After the processor 210 outputs a signal to a component, the component may send the processor 210 a confirmation indicating that the component received the signal. For example, haptic output device 260 may receive a command from the processor 210 to output a haptic effect. Once haptic output device 260 receives the command, the haptic output device 260 may send a confirmation response to the processor 210 that the command was received by the haptic output device 260. The processor 210 may receive completion data indicating that a component not only received an instruction but that the component has performed a response. For example, haptic output device 240 may receive various parameters from the processor 210. Based on these parameters haptic output device 240 may output a haptic effect and send the processor 210 completion data indicating that haptic output device 240 received the parameters and outputted a haptic effect.

### General

While the methods and systems herein are described in terms of software executing on various machines, the methods and systems may also be implemented as specifically-configured hardware, such as a field-programmable gate array (FPGA) specifically to execute the various methods. For example, embodiments can be implemented in digital electronic circuitry, or in computer hardware, firmware, software, or in a combination thereof. In one embodiment, a device may comprise a processor or processors. The processor may comprise a computer-readable medium, such as a random access memory (RAM) coupled to the processor. The processor may execute computer-executable program instructions stored in memory, such as executing one or more computer programs for editing an image. Such processors may comprise a microprocessor, a digital signal processor (DSP), an application-specific integrated circuit (ASIC), field programmable gate arrays (FPGAs), and state machines. Such processors may further or alternatively comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example computer-readable media, that may store instructions that, when executed by the processor, can cause the processor to perform the steps described herein as carried out, or assisted, by a processor. Embodiments of computer-readable media may comprise, but are not limited to, an electronic, optical, magnetic, or other storage device capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. The processor, and the processing, described may be in one or more structures, and may be dispersed through one or more structures. The processor may comprise code for carrying out one or more of the methods (or parts of methods) described herein.

The foregoing description of some embodiments of the invention has been presented only for the purpose of illustration and description and is not intended to be exhaustive or to limit the invention to the precise forms disclosed. Numerous modifications and adaptations thereof will be apparent to those skilled in the art without departing from the scope of the invention as defined in the claims.

Reference herein to "one embodiment" or "an embodiment" means that a particular feature, structure, operation, or other characteristic described in connection with the embodiment may be included in at least one implementation of the invention. The invention is not restricted to the particular embodiments described as such. The appearance of the phrase "in one embodiment" or "in an embodiment" in various places in the specification does not necessarily refer to the same embodiment. Any particular feature, structure, operation, or other characteristic described in this specification in relation to "one embodiment" may be combined with other features, structures, operations, or other characteristics described in respect of any other embodiment.

## Claims

1. A method (400, 500), comprising:
receiving electronic content (410, 510), the electronic content comprising a plurality of data items;
analyzing metadata within the electronic content to determine a haptic effect associated with a data item of the plurality of data items (420, 430; 530, 540);
generating a signal (440, 550), the signal configured to cause the haptic effect; and
outputting the signal (450, 560) in response to information corresponding to the data item:
i. being output, about to be output, or having ceased to be output, to a display (230) or
ii. being subject, about to be subject, or having ceased to be subject, to another event.

2. The method (400, 500) of claim 1, further comprising:
receiving additional metadata for the electronic content after the electronic content is received.

3. The method (400, 500) of claim 2, wherein receiving additional metadata for the electronic content after the electronic content is received comprises:
i. receiving metadata pushed from a remote device, or
ii. sending a request to a remote device for the additional metadata; and receiving a response from the remote device, the response comprising at least a portion of the additional metadata.

4. The method (400, 500) of claim 3, wherein sending the request to the remote device for the additional metadata comprises:
receiving an interaction with a portion of the electronic content; and
in response to receiving the interaction, sending the request to the remote device.

5. The method (400, 500) of any preceding claim, wherein the electronic content comprises an electronic list corresponding to a subset of the plurality of data items.

6. The method (400, 500) of claim 5, wherein outputting the signal in response to information corresponding to the data item being output, about to be output, or having ceased to be output, to a display (230) comprises outputting the signal in response to information corresponding to the data item being a predetermined number of items in the list away from being output to the display or a predetermined number of items in the list away from having been output to the display.

7. The method (400, 500) of claim 6, wherein the predetermined number is dependent on a scrolling speed of information on the display (230).

8. The method (400, 500) of any of claims 5-7, wherein analyzing metadata within the electronic content comprises:
analyzing metadata within at least a portion of the subset of data items.

9. The method (400, 500) of any preceding claim, wherein analyzing metadata within the electronic content comprises:
i. determining whether the haptic effect is embedded within the electronic content, or
ii. determining that the metadata references a location corresponding to the haptic effect and retrieving the haptic effect from the location, or
iii. determining an importance associated with the data item, wherein determining the haptic effect is based at least in part on the importance, or
iv. determining a first keyword within the metadata and comparing the first keyword with a second keyword, the second keyword being predefined, the second keyword being associated with a predefined haptic effect; and in response to determining that the first keyword corresponds to the second keyword, selecting the predefined haptic effect as the haptic effect, or
v. comparing the metadata to previously collected information associated with other data items to determine whether the metadata corresponds to at least a portion of the previously collected information, the portion of the previously collected information being associated with a second haptic effect; and in response to determining that the metadata corresponds to the portion of the previously collected information, selecting the haptic effect as the haptic effect.

10. The method (400, 500) of any preceding claim, further comprising:
analyzing contents of at least a first portion of the electronic content;
determining metadata based at least in part on the analyzed contents; and
updating metadata of the electronic content with the determined metadata.

11. The method (400, 500) of any preceding claim, wherein the data item is an image and analyzing metadata within the electronic content comprises:
analyzing the image to determine whether a particular person is in the image based at least in part on facial recognition;
in response to a determination that the particular person is in the image, determining metadata based at least in part on the particular person; and
creating or updating metadata within or associated with the data item with the determined metadata.

12. The method (400, 500) of any preceding claim, further comprising embedding the haptic effect within at least a portion of the electronic content.

13. The method (400, 500) of claim 12, wherein embedding the haptic effect within the at least the portion of electronic content comprises:
i. embedding the haptic effect within metadata within the electronic content, or
ii. embedding the haptic effect within metadata within the data item.

14. The method (400, 500) of any preceding claim, wherein outputting the signal in response to the information corresponding to the data item being output, about to be output, or having ceased to be output, to the display (230) comprises:
determining whether the information corresponding to the data item is currently being output to the display; and
outputting the signal in response to a determination that information corresponding to the data item is currently being output to the display.

15. The method (400, 500) of any preceding claim, wherein outputting the signal in response to the information corresponding to the data item being output, about to be output or having ceased to be output, to the display (230) comprises:
determining whether the information corresponding to the data item has previously been output to the display; and
outputting the signal in response to a determination that the information corresponding to the data item has not previously been output to the display.

16. An electronic device (100, 200), comprising:
a display (230);
a memory (220);
a haptic output device (240, 260); and
a processor (210) in communication with the display, the memory, and the haptic output device, the processor configured to:
receive electronic content comprising a plurality of data items;
analyze metadata within the electronic content to determine a haptic effect associated with a data item of the plurality of data items;
generate a signal, the signal configured to cause the haptic effect; and
output the signal to the haptic output device when information corresponding to the data item:
i. is being output, about to be output, or has ceased to be output, to the display or
ii. is subject, is about to be subject, or has ceased to be subject, to another event.

17. The electronic device (100, 200) of claim 16, wherein the processor (210) is further configured to:
receive additional metadata for the electronic content after the electronic content is received.

18. The electronic device (100, 200) of claim 17, further comprising:
a network interface (250), the processor (210) being in communication with the network interface, the processor being further configured to:
i. receive the additional metadata from a second device (350, 360) through the network interface, wherein the additional metadata is pushed from the second device, or
ii. send a request through the network interface to a second device (350, 360) for the additional metadata and receive a response from the second device, the response comprising the additional metadata, or
iii. send information associated with the haptic effect and the data item to a database (360) through the network interface, the information configured to associate the haptic effect with the data item, or
iv. receive an interaction with a portion of the electronic content through an input device (230) and in response to receiving the interaction, send a request through the network interface to a second device (350, 360) for the additional metadata and receive a response from the second device, the response comprising the additional metadata.

19. The electronic device (100, 200) of any of claims 16-18, wherein the electronic content comprises an electronic list corresponding to a subset of the plurality of data items.

20. The electronic device (100, 200) of claim 19, wherein analyzing metadata within the electronic content comprises analyzing metadata within at least a portion of the subset of data items.

21. The electronic device (100, 200) of any of claims 16, 17, 19 or 20, wherein the electronic device further comprises an input means (230) in communication with the processor, wherein the processor is further configured to:
receive input from the input means, wherein the signal is generated based at least in part on the input.

22. A computer-readable medium comprising program code processable to carry out the method (400, 500) of any one of claims 1-15.
